# EUROPEAN PATENT APPLICATION

(11) **EP 4 458 715 A1**
(43) Date of publication of application: **06.11.2024**
(21) Application number: 24173924.2
(22) Date of filing: 02.05.2024
(51) Int. Cl.: B65D 23/10

(54) **A HANDLE FOR A BOTTLE**

(30) Priority: 04.05.2023 US 202363464064 P
(71) Applicant: Polymer Solutions International, Inc., Medford, NJ 08055 (US)
(72) Inventor: SPADAVECCHIA, John A., Atlantic Beach (US)
(74) Representative: SSM Sandmair

(57) **Abstract**

A handle for a bottle, the handle having a grip portion with a first grip junction and a second grip junction. The handle also has a first end portion with a first proximal junction and a first distal junction, the first proximal junction connecting to the first grip junction, and a second end portion with a second proximal junction and a second distal junction, the second proximal junction connecting to the second grip junction. The handle further has a first anchor connected to the first distal junction and a second anchor coupled to the second distal junction, and has a first anchor face configured to be anchored to a first portion of the bottle and a second anchor face configured to be anchored to a second portion of the bottle. One or both of the first anchor face and the second anchor face comprise a textured surface.

## Description

### Background to the Invention

Large-format drinking water bottles, such as five-gallon water bottles and the like, may be designed for commercial or residential applications. In such applications, an individual will often need to carry and lift the water bottle from the ground or a rack, invert the water bottle, and place the water bottle into a dispenser. Five gallons of water weighs over forty pounds, which approaches the National Institute of Occupational Safety and Health (NIOSH) recommended lifting limit of fifty-one pounds. One method for reducing the risk of back injury caused by lifting heavy objects according to NIOSH is to ensure that heavy objects include a handle, in order to provide a good-quality grasp: NIOSH indicates handles can increase the safe lift load by up to 10%, depending upon other factors.

As a filled five-gallon water bottle is already at 80% of the safe lift load limit, a handle can substantially decrease the risk of spinal injury in lifting one or multiple five-gallon water bottles. Typically, to include handles in a five-gallon bottle, a handle is formed of or installed into the five-gallon water bottle during the manufacturing of that water bottle, and is therefore integrated into the water bottle, making removal of such handles extremely difficult if not impossible without damaging the water bottle.

Removal of the handle from a water bottle is primarily a concern during a reclamation or recycling process: After the contents of a five-gallon water bottle have been consumed, the bottle usually needs to be refilled or recycled. If recycled, the plastic bottle will be melted down and remanufactured into other plastic-based products. When recycling plastics, it is important that all of the plastic in a given object or batch be the same type of plastic: even small amounts of a minority type of plastic can contaminate the majority type, rendering the recycled plastic output degraded or unusable. Therefore, a water bottle would either need to have an attached handle removed if that handle were made of a different plastic, or that handle must be made of the same plastic as the water bottle.

Previously, water bottles and their handles were both made out of plastics including bisphenol A (BPA) - recycling these bottles was feasible due to the handles and the water bottles being made of the same material. However, due to, e.g., health concerns, water bottles are increasingly manufactured not out of BPA, but rather out of other plastics, including thermoplastics such as polyethylene terephthalate (PET). One might expect that, in order to maintain existing recycling strategies, the handles on the PET water bottles would be made out of PET. However, PET handles utilizing conventional designs are prone to deflection and tearing out of the PET water bottles when lifting the PET water bottle by the PET handle. With current handle designs, PET handles cannot be feasibly used with PET water bottles, substantially and materially impacting the recycling process by requiring the forcible removal of non-PET handles from PET water bottles during the recycling process.

Having identified that particular issues are present when PET handles are used with large PET water bottles, the inventors have determined that the state of the art of water bottle handles can still be advanced.

### Summary of The Invention

In a first exemplary aspect, there is provided a handle for a bottle. The handle has a grip portion with a first grip junction and a second grip junction, and a first end portion with a first proximal junction and a first distal junction, with the first proximal junction coupled to the first grip junction. The handle also has a second end portion with a second proximal junction and a second distal junction, the second proximal junction coupled to the second grip junction. The handle further has a first anchor coupled to the first distal junction, with the first anchor having a first anchor face configured to be anchored to a first portion of the bottle. The handle still further has a second anchor coupled to the second distal junction, with the second anchor having a second anchor face configured to be anchored to a second portion of the bottle. One or both of the first anchor face and the second anchor face comprise a textured surface.

In some examples, the first grip junction and the second grip junction define a grip line. The first proximal junction and the first distal junction define a first end line, and the second proximal junction and the second distal junction define a second end line. The first anchor and the first distal junction define a first anchor line, and the second anchor and the second distal junction define a second anchor line. The first end line is between the first anchor and the second end line, and the second end line is between the second anchor and the first end line.

In some examples, the first end line and the second end line are approximately parallel, the grip line and the first end line are approximately perpendicular, and the grip line and the second grip line are approximately perpendicular. The first anchor line and the first end line are approximately perpendicular, and the second anchor line and the second end line are approximately perpendicular.

In some examples, the handle has a first vestigial anchor coupled to the first distal junction, along the first anchor line. The first distal junction is between the first anchor and the first vestigial anchor, and approximately all of the force exhibited upon the first distal junction by the grip portion or by the bottle translates through the first anchor.

In some examples, the textured surface extends approximately fully transversely across the first anchor face.

In some examples, the first anchor face predominantly faces the grip line, the second anchor face predominantly faces the grip line, and the textured surface includes a groove.

In some examples, the groove is approximately perpendicular to the grip line, and the groove is approximately perpendicular to the first end line.

In some examples, the first anchor face includes a first edge and a second edge, and the groove comprises a first sub-groove and a second sub-groove. The first sub-groove extends fully transversely across the first edge, and the second sub-groove extends fully transversely across the second edge. The surface of the first anchor face between the first edge and the second edge is groove-less.

In some examples, the first anchor face predominantly faces the grip line, the second anchor face predominantly faces the grip line, and the textured surface includes stippling.

In some examples, the handle is comprised of thermoplastic.

In some examples, the handle is comprised of polyethylene terephthalate (PET).

In some examples, the first anchor is configured to be integrated into the bottle during injection stretch-blow molding of the bottle.

In some examples, the bottle is configured to carry ten liters to thirty liters of a liquid.

In some examples, the handle is configured to lift the bottle while the bottle is approximately full of the fluid and remain integrated with the bottle while the bottle is otherwise unsupported against gravity.

In some examples, the handle is configured to lift the bottle while the bottle and contents of the bottle are between zero and one thousand pounds and to remain integrated with the bottle while the bottle is otherwise unsupported against gravity.

In some examples, the handle is configured to lift the bottle while the bottle is approximately full of five gallons of water and to remain integrated with the bottle while the bottle is otherwise unsupported against gravity.

In some examples, the handle is configured to remain integrated with the bottle while subjected to between zero and 500 pounds of radial force.

In some examples, the handle is configured to remain integrated with the bottle while subjected to between zero and 200 pounds of tangential force.

In some examples, the textures surface is recessed.

In some examples, at least a portion of each of the first anchor face and the second anchor face comprises a textured surface.

In a second exemplary aspect, there is a method. The method includes positioning the handle proximate to a bottle preform. The method further includes shaping the bottle preform to produce a bottle assembly in which at least a portion of the first anchor face and the second anchor face of the handle become entrapped by a surface of the bottle as the surface expands about the first anchor face and the second anchor face.

In some examples, the surface is expanded about the first anchor face and the second anchor face by blow molding.

In some examples, the first anchor and the first distal junction define a first anchor line. The bottle preform is configured to expand approximately perpendicular to the first anchor line during injection stretch-blow molding of the bottle. After expanding approximately perpendicular to the first anchor face, the bottle is configured to shrink around the first anchor face during injection molding of the bottle.

In some examples, after expanding approximately perpendicular to the first anchor line, the bottle is configured to substantially cover an internal surface of an injection mold during injection molding of the bottle. After covering the internal surface of the injection mold, the bottle is configured to expand around the first anchor toward the first end line.

In a third exemplary aspect, there is a bottle produced by the method of the second exemplary aspect.

In a fourth aspect, there is provided a handle. The handle has a grip portion with a first grip junction and a second grip junction, and a first end portion with a first proximal junction and a first distal junction, with the first proximal junction coupled to the first grip junction. The handle also has a second end portion with a second proximal junction and a second distal junction, the second proximal junction coupled to the second grip junction. The handle further has a first anchor coupled to the first distal junction, with the first anchor having a first anchor face configured to be anchored to a first portion of a bottle. The handle still further has a second anchor coupled to the second distal junction, with the second anchor having a second anchor face configured to be anchored to a second portion of the bottle. One or both of the first anchor face and the second anchor face comprise a textured surface. The handle is configured to be integrated with the bottle.

In some examples, the handles and the bottle are configured to be recycled as an integrated component.

In some examples, the bottle is comprised of polyethylene terephthalate (PET).

### Brief Description of The Drawings

The following drawings are provided to help explain embodiments described herein, and are not intended to limit the scope of the appended claims. Like reference numbers refer to like features.
FIG. 1 is a front elevation view of a handle incorporating anchors with grooved faces, and an overlaid through line summarizing the geometry of the handle.
FIG. 2 is a front elevation view of the through line summarizing the geometry of the handle of FIG 1.
FIG. 3 is a front elevation view of the handle incorporating angles with grooved faces of FIG. 1.
FIG. 4 is a front elevation view of the handle incorporating angles with grooved faces of FIG. 1, with an overlaid two-dimensional grid structure summarizing the geometry of the handle.
FIG. 5 is an isometric view of the first anchor of the handle, depicting a first anchor face with grooves only on the edges of the anchor face, forming two anchor edges.
FIG. 6A is a front elevation view of an embodiment of a handle with an arched grip area.
FIG. 6B is a front elevation view of an embodiment of a handle with a flat grip area.
FIG. 6C is a front elevation view of an embodiment of a handle with an arched grip area and a connection tie between a first anchor and a second anchor.
FIG. 6D is a front elevation view of an embodiment of a handle with a flat, winged grip area, a connection tie between a first anchor and a second anchor, and a third and fourth anchor connected to the connection tie.
FIG. 7 is a flowchart of the integration process for integrating the handle of FIG. 1 into a bottle during injection stretch-blow molding.

### Description of Embodiments

The following provides a description of various exemplary embodiments of the invention, as used in the context of a handle integrated into a bottle, such as a water bottle. It will be appreciated that these examples are not limiting. Other embodiments may be handles configured for integrating with other plastic containers, other polyethylene terephthalate (PET) objects (e.g., plastic pallets) or in other applications.

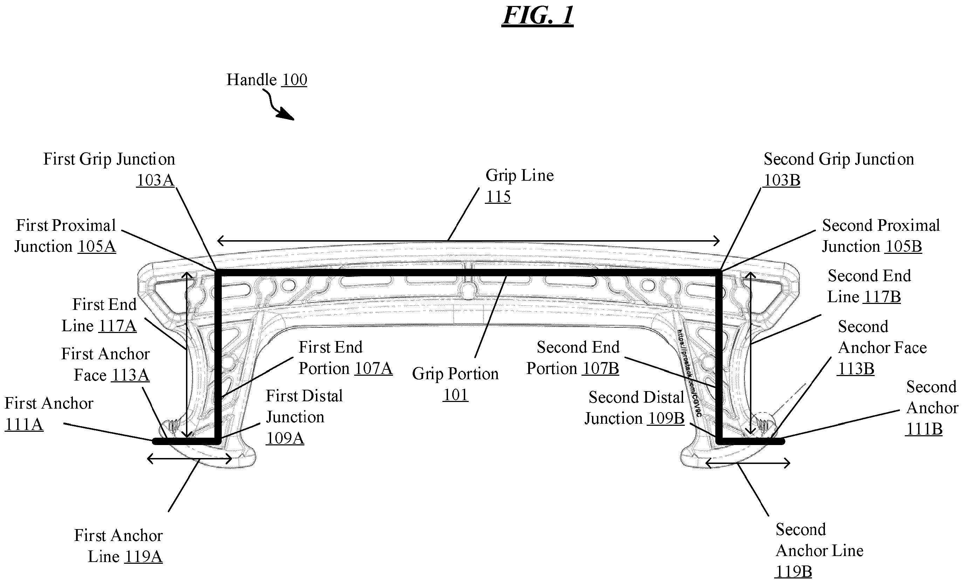

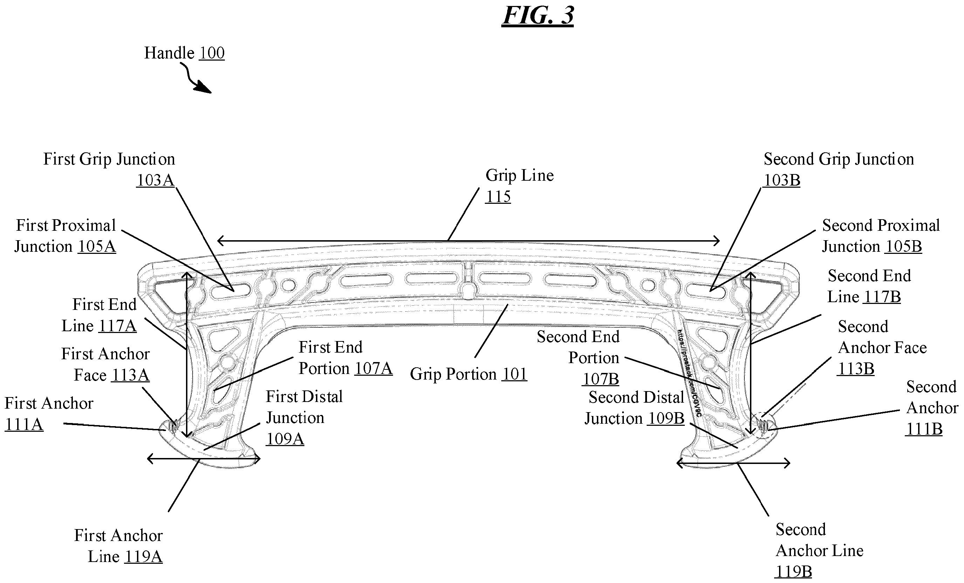

FIGS. 1-4 are front elevation views of an exemplary embodiment of a handle 100. The handle 100 has a grip portion 101 configured for grasping by a human hand or a mechanically-analogous object. A grip portion 101 configured for grasping by other mechanical objects, such as a hook, claw, or bolt, is also contemplated. The handle 100 in this embodiment includes a first grip junction 103A on one end of the grip portion 101, and a second grip junction 103B disposed on the opposite end of the grip portion 101.

The handle includes at least one anchor 111A-B, and in this example includes two anchors 111A-B, disposed on opposite ends of the grip portion 101. The anchors 111A-B are configured to integrate with another object, in order for that object to be lifted, turned, pulled, or otherwise manipulated through, in full or in part, the handle 100. In this embodiment, the anchors 111A-B integrate with that object via the anchor faces 113A-B of the anchors 111A-B.

Between the grip portion 101 and the first anchor 111A is a first end portion 107A. The first end portion 107A has a first proximal junction 105A, which connects to the first grip junction 103A of the grip portion 101. The first end portion 107A also has a first distal junction 109A, opposite the first proximal junction 105A, which connects to the first anchor 119A.

Between the grip portion 101 and the second anchor 111B is a second end portion 107B. The second end portion 107B has a second proximal junction 105B, which connects to a second grip junction 103B of the grip portion 101. The second end portion 107A also has a second distal junction 109A, opposite the first proximal junction 105A, which connects to the first anchor 119A.

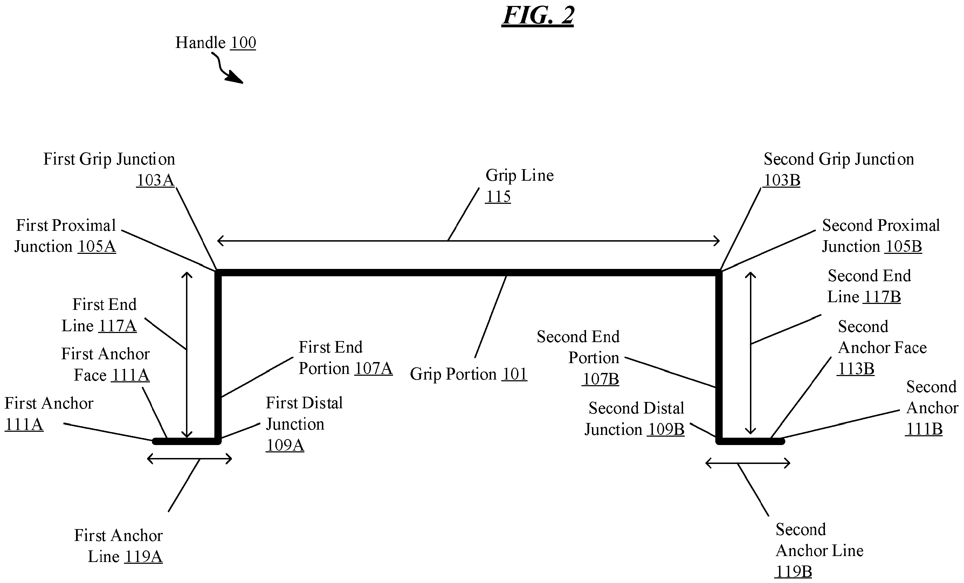

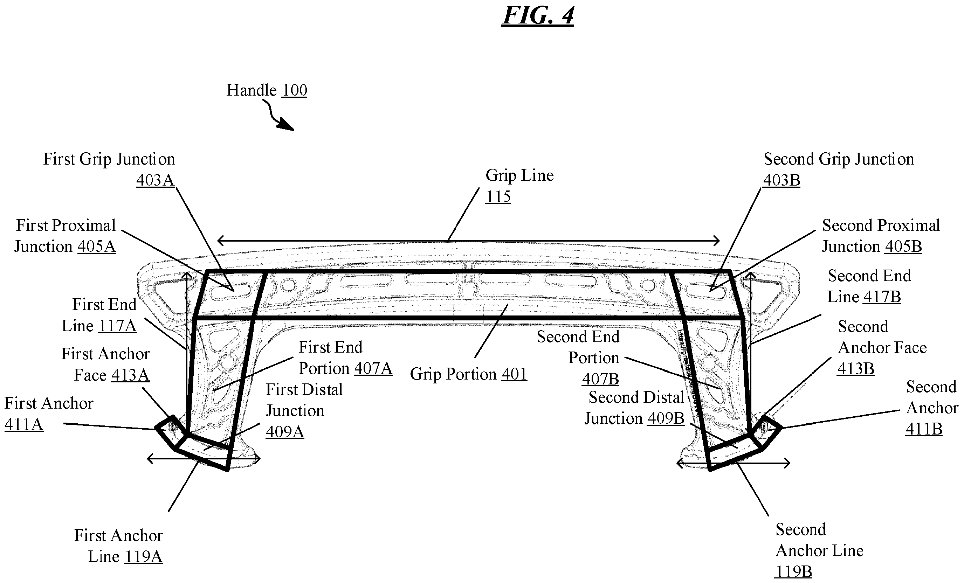

The geometry of the grip portion 101, anchors 111A-B, and end portions 107A-B may be elaborate and include ornamentation. Thus, the profile of the handle 100 may be interrupted at places by openings. The profile also may be affected by normal manufacturing variations, or by the addition of intentional minor variations in shape. Other alternatives and variations will be apparent to persons of ordinary skill in the art in view of the present disclosure. The applied forces and moments of the handle 100 can be approximated onto the thick solid lines 101, 107A-B, 111A-B in FIGS. 1 and 2, or onto the areas defined by thick solid lines 401, 407A-B, 411A-B in FIG. 4. The approximations of the physical components of the handle 100 can be further simplified by defining each component 101, 107A-B, 111A-B by the predominant linearity of that component 101, 107A-B, 111A-B.

Therefore, the grip portion 101 can be simplified to a grip line 115, where the grip line 115 is approximately parallel to and colinear with an average center of mass along the grip portion 101. If the grip line 115 is understood as a line segment, the line segment begins at a point along the grip line 115 closest to the first grip junction 103A, and the line segment ends at a point along the grip line 115 closest to the second grip junction 103B.

Likewise, the first end portion 107A can be simplified to a first end line 117A, where the first end line 117A is approximately parallel to and colinear with an average center of mass along the first end portion 107A. If the first end line 117A is understood as a line segment, the line segment begins at a point along the first end line 117A closest to the first grip junction 103A, and the line segment ends at a point along the first end line 117A closest to the first distal junction 109A.

Continuing, the second end portion 107B can be simplified to a second end line 117B, where the second end line 117B is approximately parallel to and colinear with an average center of mass along the second end portion 107B. If the second end line 117B is understood as a line segment, the line segment begins at a point along the second end line 117B closest to the second grip junction 103B, and the line segment ends at a point along the second end line 117B closest to the second distal junction 109B.

Further, the first anchor 111A can be simplified to a first anchor line 119A, where the first anchor line 119A is approximately parallel to and colinear with an average center of mass along the first anchor 111A. If the first anchor line 119A is understood as a line segment, the line segment begins at a point along the first anchor line 119A closest to the first distal junction 109A, and the line segment ends at a point along the first anchor line 119A approximately close to the first anchor face 103A.

Still further, the second anchor 111B can be simplified to a second anchor line 119B, where the second anchor line 119B is approximately parallel to and colinear with an average center of mass along the second anchor 111B. If the second anchor line 119B is understood as a line segment, the line segment begins at a point along the second anchor line 119B closest to the second distal junction 109B, and the line segment ends at a point along the second anchor line 119B approximately close to the second anchor face 103B.

In this embodiment, the grip line 115 is approximately perpendicular to the first end line 117A and the second end line 117A. Two lines 115, 117A-B, 119A-B which are perpendicular (having an intersecting angle of ninety degrees along their intersecting planes) to an approximate extent may have a tolerance for perpendicularity up to thirty degrees (i.e., an intersecting angle between sixty and one-hundred-and-twenty degrees). The first end line 117A and the second end line 117B in this embodiment are approximately parallel. Two lines 115, 117A-B, 119A-B which are parallel (having no intersection along any plane) to an approximate extent may have a tolerance for parallelism up to thirty degrees (i.e., may have an intersecting angle between zero and thirty degrees). The first anchor line 119A is approximately perpendicular to the first end line 117A in this example, and the second anchor line 119B is approximately perpendicular to the second end line 117B. The first anchor line 117A is approximately parallel to the second anchor line 119B - Alternatively, the first anchor line 117A may occupy the same points as the second anchor line 117B, and under certain mathematical definitions may not be deemed "parallel" - under those definitions, the first anchor line 117A may be fully intersecting with the second anchor line 117B: for the purposes of this description, two or more lines which are fully intersecting can be understood as being parallel.

Other relationships between the grip line 115, end lines 117A-B, and anchor lines 119A-B are contemplated. For example, the first end line 117A and the second end line 117B may be infinitesimally short, or may be parallel to the grip line 115: in those embodiments, the first anchor line 119A, first end line 117A, grip line 115, second end line 117B, and the second anchor line 119B may all be approximately parallel. In another example, the handle 100 may constitute a knob-style handle, or a hook-style handle, which may only include a single grip junction 103A, single end portion 107A, and single anchor 111A. A handle 100 may also have a first grip junction 103A and second grip junction 103B (and consequently the end portions 107A-B and anchors 111A-B) at approximately the same end of the grip portion 101. More than two end portions 107A-B and anchors 111A-B are also contemplated, in particular for applications where the handle 100 is designed to be manipulated by a mechanical apparatus (e.g., a claw).

Any suitable material may be used for the handle 100, such as polyethylene, polypropylene, unsaturated polymers, thermoplastics or resins such as engineering resins. The handle 100 may be constructed as a unitary part, or as an assembly of parts, and each part may be made by injection molding, rotational molding, blow molding or other methods. In this embodiment, the handle 100 uses polyethylene terephthalate (PET).

It has been found that an anchor face 113A-B with a textured surface is particularly beneficial for integrating with plastic bottles, in particular PET plastic bottles. Without being bound to any theory of operation, it is believed that the textured surface integrates more completely during injection stretch-blow molding of the plastic bottle. It is also believed that anchor faces 113A-B facing out, away from the center of the grip portion 101, are most effective: an anchor with both an outward-facing as well as an inward-facing anchor face would experience almost no force on the inward-facing anchor faces, and would experience almost all forces on the outward facing anchor faces 113A-B. The inward-facing anchor faces, if they were included in this embodiment, would be functionally vestigial anchor faces. Still further, it is believed that a grooved anchor faces 113A-B is preferable, however a stippled anchor face 113A-B may still be as effective as a grooved anchor face 113A-B.

Embodiments may have any number of grooves on the anchor faces 113A-B suitable to improve the integration with bottles. In the shown example, there are three grooves on each anchor face 113A-B. Other embodiments may have fewer or more grooves. For example, embodiments may have one or two grooves per anchor face 113A-B.

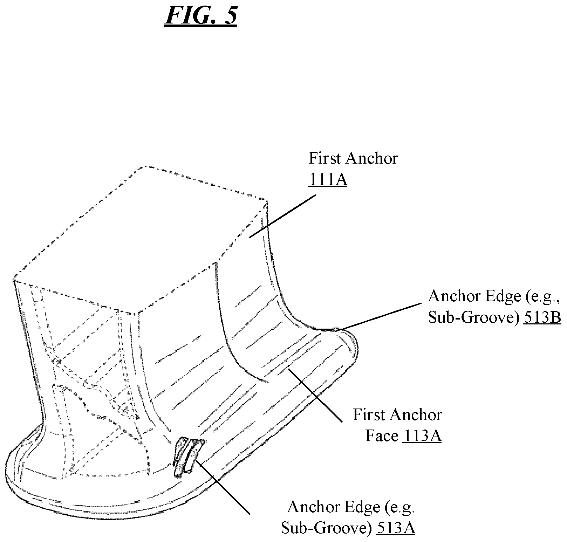

The grooves or stippling may extend fully or partially along the length of the anchor faces 113A-B in a lateral direction. Grooving or stippling only the anchor edges 513A-B (see FIG. 5) of the anchor faces 113A-B can provide approximately the same strength of integration between the handle 100 and the plastic bottle as grooves or stippling across the entire anchor faces 113A-B.

Preferably, the grooves or stippling are recessed within the anchor faces 113A-B. In some embodiments where the grooves or stippling project or protrude beyond the anchor face 113A-B profile, tears or holes can be formed in the plastic bottle during the blow process. The grooves or stippling may all protrude by the same distances. Alternatively, individual grooves or specks may protrude at different distances.

FIG. 5 is an isometric view of the first anchor 111A of the handle 100, depicting a first anchor face 113A with grooves only on the edges of the anchor face 113A, forming two anchor edges 513A-B.

Therefore, FIGS 1-5 depict a handle 100 for a bottle, including a grip portion 101 with a first grip junction 103A and a second grip junction 103B, and a first end portion 107A with a first proximal junction 105A and a first distal junction 109A, with the first proximal junction 105A coupled to the first grip junction 103A. The handle 100 also includes a second end portion 107B with a second proximal junction 105B and a second distal junction 109B, the second proximal junction 105B coupled to the second grip junction 103B. The handle 100 includes a first anchor 111A coupled to the first distal junction 109A which has a first anchor face 113A configured to be anchored to a first portion of the bottle, and a second anchor 111B coupled to the second distal junction 109B which has a second anchor face 113B configured to be anchored to a second portion of the bottle. One or both of the first anchor face 113A and the second anchor face 113B comprises a textured surface.

In some embodiments, the first grip junction 103A and the second grip junction 103B define a grip line 115, the first proximal junction 105A and the first distal junction 109A define a first end line 117A, the second proximal junction 105B and the second distal junction 109B define a second end line 117B, the first anchor 111A and the first distal junction 109A define a first anchor line 119A, the second anchor 111B and the second distal junction 109B define a second anchor line 119B, the first end line 117A is between the first anchor 111A and the second end line 117B, and the second end line 117B is between the second anchor 111B and the first end line 117A. Stated in an alternative manner, the anchors 111A-B face outward, away from the center of the handle 100.

Additionally, the first end line 117A and the second end line 117B can be approximately parallel. The grip line 115 and the first end line 117A can be approximately perpendicular. The grip line 115 and the second end line 117B can also be approximately perpendicular. The first anchor line 119A and the first end line 117A can be approximately perpendicular. The second anchor line 119B and the second end line 117B can be approximately perpendicular.

Further, the handle 100 can include a first vestigial anchor coupled to the first distal junction 109A, along the first anchor line 119A, where the first distal junction 109A is between the first anchor 111A and the first vestigial anchor, and approximately all of the force exhibited upon the first distal junction 109A by the grip portion 115 or by the bottle translates through the first anchor 111A. Stated in an alternative manner, any anchor-like design facing the interior of the handle can be largely or completely vestigial, and support very little of the forces inflicted on the handle by an individual lifting the bottle.

Still further, the textured surface can extend approximately fully transversely across the first anchor face 113A. The first anchor face 113A can predominantly face the grip line 115, the second anchor face 113B can predominantly face the grip line 115, and the textured surface can include a groove. The anchor faces 113A-B facing the grip line means that the anchor faces 113A-B face away from the center of the bottle and toward an individual lifting or manipulating the bottle. "Predominantly" should take its conventional definition, but at minimum indicates that at least half of the anchor face 113A-B faces the grip line 115.

Continuing, the groove can be approximately perpendicular to the grip line 115 and the groove can be approximately perpendicular to the first end line 117A. This relationship indicates that, for example, if the grip line 115 is on an X-axis, the first end line 117A is on a Y-axis, then the groove runs along a Z-axis.

In some embodiments, the first anchor face 113A includes a first edge 513A and a second edge 513B, and the groove comprises a first sub-groove 513A and a second-sub groove 513B. The first sub groove 513A extends fully transversely across the first edge 513A, and the second sub-groove 513B extends fully transversely across the second edge 513B. The surface of the first anchor face 113A between the first edge 513A and the second edge 513B is groove-less.

In other embodiments, the first anchor face 113A predominantly faces the grip line 115, the second anchor face 113B predominantly faces the grip line 115, and the textured surface includes stippling.

In some embodiments, the handle 100 is comprised of a thermoplastic, and in some of those embodiments, the handle 100 is comprised of polyethylene terephthalate (PET).

In some embodiments, the first anchor 111A is configured to be integrated into the bottle during injection stretch-blow molding of the bottle.

In some embodiments, the bottle is configured to carry ten liters to thirty liters of a liquid. That liquid can be liquid at approximately 70 degrees Fahrenheit. That liquid can have a density as low as 70% of the density of pure water, or a density as high as 180% of the density of pure water, though densities as low as 0% of the density of pure water, such as a vacuum, or densities as high as 2259% of the density of pure water, such as Osmium, are contemplated.

Continuing, the handle 100 can be configured to lift the bottle while the bottle is approximately full of the fluid and remain integrated with the bottle while the bottle is otherwise unsupported against gravity.

In some embodiments, the handle 100 is configured to lift the bottle while the bottle and contents of the bottle are between zero and one thousand pounds and to remain integrated with the bottle while the bottle is otherwise unsupported against gravity. Higher upper limits, such as 124,300 lbs., or double the maximum load weight of a shipping container, are contemplated.

In some embodiments, the handle 100 is configured to lift the bottle while the bottle is approximately full of five gallons of water and to remain integrated with the bottle while the bottle is otherwise unsupported against gravity.

In some embodiments, the handle 100 is configured to remain integrated with the bottle while subjected to between zero and 500 pounds of radial force. The handle 100 can in some embodiments be configured to lift the bottle while the bottle and contents of the bottle are exhibiting between zero and 500 pounds of radial force against the handle 100, and to remain integrated with the bottle while the bottle is otherwise unsupported against the radial force. Higher radial forces, such as 124,300 lbs., or double the maximum load weight of a shipping container, are contemplated

In some embodiments, the handle 100 is configured to remain integrated with the bottle while subjected to between zero and 200 pounds of tangential force. The handle 100 can in some embodiments be configured to lift the bottle while the bottle and contents of the bottle are exhibiting between zero and 200 pounds of tangential force against the handle and to remain integrated with the bottle while the bottle is otherwise unsupported against the tangential force. Higher tangential forces, such as 72,000 pounds of tangential force, or double the force exhibited upon a 40 lbs. bottle struck in a 60 mile-per-hour car collision, are contemplated.

In some embodiments, the textured surface is recessed from, protruding from, or level with an adjacent surface. In particular, a recessed textured surface can avoid tears or holes forming in the bottle during the blow process.

In some embodiments, at least a portion of each of the first anchor face 113A and the second anchor face 113B comprises a textured surface.

FIGS 1-5 also depict a handle 100, including a grip portion 101 with a first grip junction 103A and a second grip junction 103B, and a first end portion 107A with a first proximal junction 105A and a first distal junction 109A, with the first proximal junction 105A coupled to the first grip junction 103A. The handle 100 also includes a second end portion 107B with a second proximal junction 105B and a second distal junction 109B, the second proximal junction 105B coupled to the second grip junction 103B. The handle 100 includes a first anchor 111A coupled to the first distal junction 109A which has a first anchor face 113A configured to be anchored to a first portion of the bottle, and a second anchor 111B coupled to the second distal junction 109B which has a second anchor face 113B configured to be anchored to a second portion of the bottle. One or both of the first anchor face 113A and the second anchor face 113B comprises a textured surface. The handle 100 is configured to be integrated with the bottle.

In some embodiments, the handle 100 and the bottle are configured to be recycled as an integrated component. Recycling as an integrated component can be facilitated by manufacturing the handle 100 and the bottle out of the same material, thereby removing any need to separate the handle 100 from the bottle before melting down the handle 100 and the bottle. If two different types of plastics are recycled together, one type may be understood to be contaminating the other type, and vice versa. In such a recycling scenario, a handle 100 made of one type of plastic and a bottle made of another type of plastic cannot be recycled as an integrated component, as the plastic of the handle 100 could contaminate the plastic of the bottle, or vice versa.

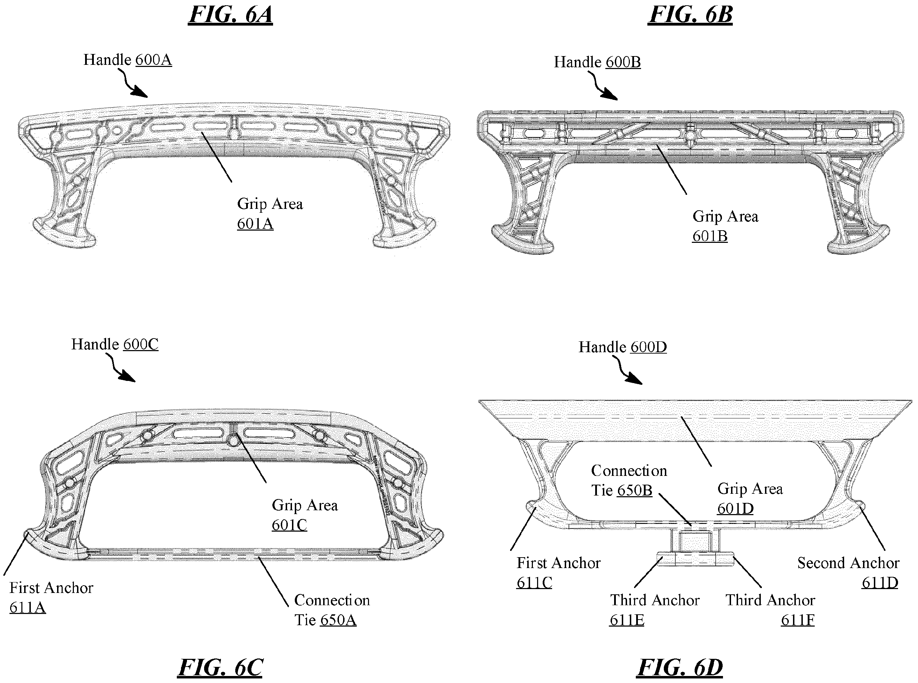

In some embodiments, the bottle is comprised of polyethylene terephthalate (PET). FIG. 6A is a front elevation view of an embodiment of a handle 600A with an arched grip area 601A. The arched grip area 601A may be more ergonomic for repeated lifting of the integrated bottle.

FIG. 6B is a front elevation view of an embodiment of a handle 600B with a flat grip area 601B. The flat grip area 601B may be able to reside more comfortably within the profile of the bottle to which it has been integrated, allowing for improved storage of bottle which have integrated handles 600B

FIG. 6C is a front elevation view of an embodiment of a handle 600C with an arched grip area 601C and a connection tie 650A between a first anchor 611A and a second anchor 611B. The connection tie 650A may provide superior integration into the bottle, may reduce opposing torsional forces on the first anchor 611A and the second anchor 611B, may reduce the risk of damage to the handle 600C before integration of the handle 600C into a bottle, or may act as an area which can be grasped by a machine performing injection stretch-blow molding of the bottle. The connection tie 650A may also be removed during or after completion of the injection stretch-blow molding of the bottle.

FIG. 6D is a front elevation view of an embodiment of a handle 600D with a flat, winged grip area 601D, a connection tie 650B between a first anchor 611C and a second anchor 611D, and a third anchor 611E and fourth anchor 611F connected to the connection tie 650B. The third anchor 611E and fourth anchor 611F may provide additional integration strength into the bottle, may be used to house a sensing device to monitor the contents of the bottle, may act as a pressure release for the bottle, or may also act as an area which can be grasped by the machine performing the injection stretch-blow molding of the bottle. In some embodiments the third anchor 611E and fourth anchor 611F may also be removed during or after completion of the injection stretch-blow molding of the bottle.

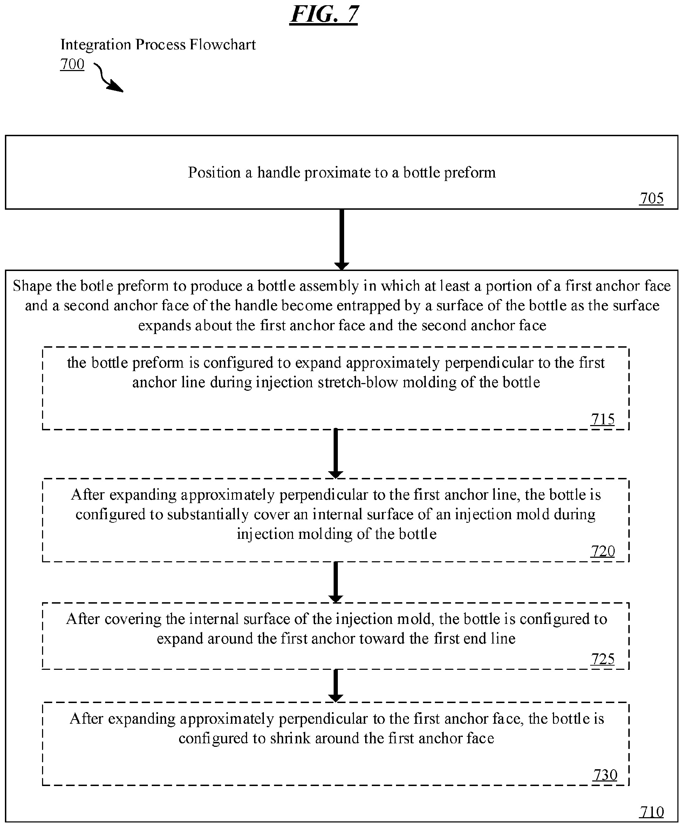

FIG. 7 is a flowchart of the integration process 700 for integrating the handle 100 of FIG. 1 into a bottle during injection stretch-blow molding. In step 705, the handle 100 is positioned proximate to a bottle preform. In step 710, the bottle preform is shaped to produce a bottle assembly in which at least a portion of the first anchor face 113A and the second anchor face 113B of the handle 100 become entrapped by a surface of the bottle as the surface expands about the first anchor face 113A and the second anchor face 113B.

Within step 710, several sub-steps are described. In step 715, the bottle preform is configured to expand approximately perpendicular to the first anchor line 119A during injection stretch-blow molding of the bottle. In step 720, after expanding approximately perpendicular to the first anchor line 119A, the bottle is configured to substantially cover an internal surface of an injection mold during injection molding of the bottle. In step 725, after covering the internal surface of the injection mold, the bottle is configured to expand around the first anchor toward 113A the first end line 117A. In step 730, after expanding approximately perpendicular to the first anchor face 119A, the bottle is configured to shrink around the first anchor face 119A.

The present disclosure provides examples of embodiments of a handle that is adapted to better integrate with polyethylene terephthalate (PET) bottles. It will be appreciated that embodiments may nevertheless be used with conventional plastic bottles, or with other objects such as pallets. It will also be appreciated that features of embodiments may be used without other features, or in different combinations, to beneficial effect. Furthermore, it will be appreciated that certain features of the embodiments may be selected for ornamental design and are not dictated by practical function. For example, the shapes of the grooves, the proportions of the anchors 111A-B to each other and to the other parts, such as the grip portion 101, the inclusion of vestigial anchors on the interior of the handle 100 which provide minimal integration strength, the number, density and length of the anchors 111A-B or grooves, and other features may be selected based to some degree or entirely according to aesthetic preferences. Accordingly, design elements of these features can be varied and selected while maintaining functionality, such that a variety of ornamental configurations are available with substantially the same function or performance.

Unless otherwise stated, any and all measurements, values, ratings, positions, magnitudes, sizes, angles, and other specifications that are set forth in this specification, including in the claims that follow, are approximate, not exact. Such amounts are intended to have a reasonable range that is consistent with the functions to which they relate and with what is customary in the art to which they pertain. For example, unless expressly stated otherwise, a parameter value or the like may vary by as much as ± 5% or as much as ± 10% from the stated amount.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," "includes," "including," "has," "having," "containing," "contain", "contains," "with," "formed of," or any other variation thereof, are intended to cover a non-exclusive inclusion, such that a process, method, article, or apparatus that comprises or includes a list of elements or steps does not include only those elements or steps but may include other elements or steps not expressly listed or inherent to such process, method, article, or apparatus. An element preceded by "a" or "an" does not, without further constraints, preclude the existence of additional identical elements in the process, method, article, or apparatus that comprises the element.

In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, the subject matter to be protected lies in less than all features of any single disclosed example. Thus, the following claims are hereby incorporated into the Detailed Description, with each claim standing on its own as a separately claimed subject matter.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the true scope of the present concepts.

## Claims

1. A handle for a bottle, comprising:
a grip portion with a first grip junction and a second grip junction;
a first end portion with a first proximal junction and a first distal junction, the first proximal junction coupled to the first grip junction;
a second end portion with a second proximal junction and a second distal junction, the second proximal junction coupled to the second grip junction;
a first anchor coupled to the first distal junction and having a first anchor face configured to be anchored to a first portion of the bottle; and
a second anchor coupled to the second distal junction and having a second anchor face configured to be anchored to a second portion of the bottle;
wherein one or both of the first anchor face and the second anchor face comprises a textured surface.

2. The handle of claim 1, wherein:
the first grip junction and the second grip junction define a grip line;
the first proximal junction and the first distal junction define a first end line;
the second proximal junction and the second distal junction define a second end line;
the first anchor and the first distal junction define a first anchor line;
the second anchor and the second distal junction define a second anchor line;
the first end line is between the first anchor and the second end line; and
the second end line is between the second anchor and the first end line.

3. The handle of claim 2, wherein:
the first end line and the second end line are approximately parallel;
the grip line and the first end line are approximately perpendicular;
the grip line and the second grip line are approximately perpendicular;
the first anchor line and the first end line are approximately perpendicular; and
the second anchor line and the second end line are approximately perpendicular.

4. The handle of claim 2, further comprising:
a first vestigial anchor coupled to the first distal junction, along the first anchor line; wherein:
the first distal junction is between the first anchor and the first vestigial anchor; and
approximately all of the force exhibited upon the first distal junction by the grip portion or by the bottle translates through the first anchor.

5. The handle of claim 2, wherein:
the textured surface extends approximately fully transversely across the first anchor face.

6. The handle of claim 2, wherein:
the first anchor face predominantly faces the grip line;
the second anchor face predominantly faces the grip line; and
the textured surface includes a groove.

7. The handle of claim 6, wherein:
the groove is approximately perpendicular to the grip line; and
the groove is approximately perpendicular to the first end line.

8. The handle of claim 6, wherein:
the first anchor face includes a first edge and a second edge, and the groove comprises a first sub-groove and a second sub-groove;
the first sub-groove extends fully transversely across the first edge, and the second sub-groove extends fully transversely across the second edge; and
the surface of the first anchor face between the first edge and the second edge is groove-less.

9. The handle of claim 2, wherein:
the first anchor face predominantly faces the grip line;
the second anchor face predominantly faces the grip line; and
the textured surface includes stippling.

10. The handle of claim 1, wherein:
the handle is comprised of a thermoplastic.

11. The handle of claim 11, wherein:
the handle is comprised of polyethylene terephthalate (PET).

12. The handle of claim 1, wherein:
the first anchor is configured to be integrated into the bottle during injection stretch-blow molding of the bottle.

13. The handle of claim 1, wherein:
the bottle is configured to carry ten liters to thirty liters of a liquid.

14. The handle of claim 15, wherein:
the handle is configured to lift the bottle while the bottle is approximately full of the fluid and remain integrated with the bottle while the bottle is otherwise unsupported against gravity.

15. The handle of claim 1, wherein:
the handle is configured to lift the bottle while the bottle and contents of the bottle are between zero and one thousand pounds and to remain integrated with the bottle while the bottle is otherwise unsupported against gravity.

16. The handle of claim 1, wherein:
the handle is configured to lift the bottle while the bottle is approximately full of five gallons of water and to remain integrated with the bottle while the bottle is otherwise unsupported against gravity.

17. The handle of claim 1, wherein:
the handle is configured to remain integrated with the bottle while subjected to between zero and 500 pounds of radial force.

18. The handle of claim 1, wherein:
the handle is configured to remain integrated with the bottle while subjected to between zero and 200 pounds of tangential force.

19. The handle of claim 1, wherein the textured surface is recessed from, protruding from, or level with an adjacent surface.

20. The handle of claim 1, wherein at least a portion of each of the first anchor face and the second anchor face comprises a textured surface.

21. A method comprising:
positioning the handle of claim 1 proximate to a bottle preform; and
shaping the bottle preform to produce a bottle assembly in which at least a portion of the first anchor face and the second anchor face of the handle become entrapped by a surface of the bottle as the surface expands about the first anchor face and the second anchor face.

22. The method of claim 21, wherein the surface is expanded about the first anchor face and the second anchor face by blow molding.

23. The method of claim 21, wherein:
the first anchor and the first distal junction define a first anchor line; the bottle preform is configured to expand approximately perpendicular to the first anchor line during injection stretch-blow molding of the bottle; and
after expanding approximately perpendicular to the first anchor face, the bottle is configured to shrink around the first anchor face during injection molding of the bottle.

24. The method of claim 21, wherein:
after expanding approximately perpendicular to the first anchor line, the bottle is configured to substantially cover an internal surface of an injection mold during injection molding of the bottle; and
after covering the internal surface of the injection mold, the bottle is configured to expand around the first anchor toward the first end line.

25. A bottle produced by the method of claim 21.

26. A handle comprising:
a grip portion with a first grip junction and a second grip junction;
a first end portion with a first proximal junction and a first distal junction, the first proximal junction coupled to the first grip junction;
a second end portion with a second proximal junction and a second distal junction, the second proximal junction coupled to the second grip junction;
a first anchor coupled to the first distal junction and having a first anchor face configured to be anchored to a first portion of a bottle; and
a second anchor coupled to the second distal junction and having a second anchor face configured to be anchored to a second portion of the bottle;
wherein one or both of the first anchor face and the second anchor face comprises a textured surface; and
the handle is configured to be integrated with the bottle.

27. The handle of claim 1, wherein the handle and the bottle are configured to be recycled as an integrated component.

28. The handle of claim 1, wherein:
the bottle is comprised of polyethylene terephthalate (PET).
